# EUROPEAN PATENT APPLICATION

(11) **EP 4 012 000 A1**
(43) Date of publication of application: **15.06.2022**
(21) Application number: 20306544.6
(22) Date of filing: 11.12.2020
(51) Int. Cl.: C09J 163/00

(54) **PHOTOCURABLE ADHESIVE COMPOSITION**

(71) Applicant: Bostik SA, 92700 Colombes (FR)
(72) Inventor: UENO, Seiki, OSAKA, Osaka 5810024 (JP)
(74) Representative: Arkema Patent

(57) **Abstract**

It is provided a photocurable adhesive composition, an article comprising at least one surface coated with the adhesive composition and the use thereof. The photocurable adhesive composition exhibits a good storage stability and a good adhesiveness, and which ensures at the same time a satisfactory curing time. It makes it possible to obtain good quality articles presenting a high flexibility.

## Description

### Technical field

The present invention relates to a photocurable adhesive composition, an article comprising at least one surface coated with the adhesive composition and the use thereof. The photocurable adhesive composition exhibits a good storage stability and a good adhesion, and which ensures at the same time a satisfactory curing time. It makes it possible to cure opaque substrates and to obtain good quality articles presenting a high flexibility.

### Technical background

Photocurable adhesive compositions can be used in a wide variety of applications such as electronics, electronical equipment, packaging and sealing applications or even painting applications. For such compositions, a combination of properties must be satisfied such as adhesion, storage stability, mechanical properties and curing time.

A common mechanism to achieve curing of a photocurable adhesive composition is by radical polymerization. However, once the composition has been irradiated with an energy source (such as light or heat), the curing is carried out instantaneously. This makes it difficult, even impossible, to cure compositions applied in non-transparent (opaque) substrates.

Another mechanism to achieve curing of a photocurable adhesive composition is by cationic polymerization. In this case, when the substrate is irradiated with a sufficient amount of energy, the curing of the composition is not carried out instantaneously which makes it possible to apply the composition to an opaque substrate and achieve curing.

In addition, it has been observed, particularly when polymers comprising crosslinkable silicon groups are used in combination with an epoxy resin in order to increase the flexibility of the cured composition, that separation between the different constituents of the composition occurs. In this case, the brittle profileof the resin must be altered in order to increase compatibility. However, it seems that the brittle modification affects storage stability in a way that the brittle modification and the storage stability cannot be secured at the same time.

Document JP 2015038182 relates to a fast-curing photocurable composition comprising a cross-linkable silicon group-containing (meth)acrylic polymer, an epoxy compound having at least two epoxy groups, an oxetane compound having a hydroxyl group and a cationic photopolymerization initiator.

Document JP 2015078314 relates to a photocurable composition comprising a crosslinkable silicon group-containing (meth)acrylic polymer, an epoxy compound having at least two epoxy groups, a cation moiety which is an aromatic iodonium and a cationic polymerization initiator.

Document JP 2014156585 relates to a photocurable composition comprising a (meth)acrylic acid ester-based polymer having an average of 0.8 or more crosslinkable silyl groups, a (meth)acryloyl group-containing compound, a curing accelerator, a photoradical initiator, and (I) a resin filler having an average particle size of 1 to 150 µm.

There is thus a need for a photocurable adhesive composition which presents a good storage stability and a good adhesion, and which ensures at the same time a satisfactory curing time and a good compatibility between the different components of the composition. In addition, there is a need to provide a photocurable adhesive composition which makes it possible to obtain good quality articles presenting a high flexibility.

### Summary of the invention

It is a first object of the invention to provide a photocurable adhesive composition comprising, by total weight of the epoxy compound comprising at least two epoxy groups: an epoxy compound comprising at least two epoxy groups; from 25 to 50 %, preferably from 35 to 45 %, by weight of a block copolymer comprising at least two methacrylate terminal blocks and an acrylate mid-block; from 10 to 30 %, preferably from 10 to 30 %, by weight of a tackifying resin; and from 4 to 15 %, preferably from 6 to 12 %, by weight of a photo-cationic polymerization initiator.

In some embodiments, the methacrylate terminal blocks are obtained from methacrylate monomers selected from the group consisting of methyl methacrylate, ethyl methacrylate, methacrylic acid, propyl methacrylate, n-butyl methacrylate, isobutyl methacrylate, pentyl methacrylate, hexyl methacrylate, cyclohexyl methacrylate, isobornyl methacrylate, methoxyethyl methacrylates, 2-aminoethyl methacrylates, PEG methacrylates with polyethylene glycol (PEG) groups having a molar mass in the range of 400 to 10,000 g/mol, and mixtures thereof; preferably wherein the methacrylate blocks are obtained from methyl methacrylate.

In some embodiments, the acrylate mid-block is obtained from acrylate monomers selected from the group consisting of acrylate, butyl acrylate, 2-ethylhexyl acrylate, and mixtures thereof; preferably from butyl acrylate, 2-ethylhexyl acrylate, and mixtures thereof.

In some embodiments, the block copolymer has a glass transition temperature of 0°C or less; preferably of -30 °C or less.

In some embodiments, the composition comprises from 30 to 50 %, by weight of the epoxy compound comprising at least two epoxy groups relative to the total weight of the composition.

In some embodiments, the epoxy compound comprising at least two epoxy groups is selected from the group consisting of glycidyl ether epoxy resins, glycidyl ester epoxy resins, glycidyl amine epoxy resins, aliphatic epoxy resins and mixtures thereof.

In some embodiments, the composition comprises at least one oxetane compound, preferably from 5 to 20 %, more preferably from 8 to 15 %, by weight of at least one oxetane compound relative to the total weight of the epoxy compound comprising at least two epoxy groups.

In some embodiments, the photo-cationic polymerization initiator is an onium salt comprising an onium cation and an hexafluorophosphate anion.

In some embodiments, the composition comprises at least one epoxy compound comprising one epoxy group, preferably from 30 to 80 %, more preferably from 45 to 55 %, by weight of at least one epoxy compound comprising one epoxy group relative to the total weight of the epoxy compound comprising at least two epoxy groups.

In some embodiments, the composition comprises at least one polyol, preferably from 5 to 50 %, more preferably from 20 to 30 %, by weight of at least one polyol relative to the total weight of the epoxy compound comprising at least two epoxy groups.

In some embodiments, the composition comprises at least one sensitizer, preferably from 4 to 15 %, more preferably from 6 to 12 %, by weight of at least one sensitizer relative to the total weight of the epoxy compound comprising at least two epoxy groups.

In some embodiments, the composition comprises at least one viscosity modifier, preferably from 5 to 30 %, more preferably from 15 to 30 %, by weight of at least viscosity modifier relative to the total weight of the epoxy compound comprising at least two epoxy groups.

In some embodiments, the composition comprises at least one auxiliary additive selected from the group consisting of polymerization inhibitors, pigments, adhesion promoters, antioxidants, curing accelerators, fillers, plasticizers, surfactants, lubricants, antistatic agents, flame retardants and mixtures thereof.

It is a second object of the invention to provide an article comprising at least one interior or exterior surface coated with the adhesive composition as described herein.

It is a third object of the invention to provide the use of the composition as described herein, as an adhesive for bonding two substrates together, or as a coating on the surface of a substrate.

The present invention makes it possible to address the need mentioned above. In particular, the invention provides a photocurable adhesive composition which presents a good storage stability and a good adhesion, and which ensures at the same time a satisfactory curing time and a good compatibility between the different components of the composition. In addition, the invention provides a photocurable adhesive composition which makes it possible to obtain good quality articles presenting a high flexibility.

This is made possible due to the composition of the present invention. In particular, it has been surprisingly found that a photocurable adhesive composition according to the present invention makes it possible to provide a satisfactory curing time while at the same time maintaining a good compatibility and a good adhesion. This composition is particularly suitable for curing on opaque substrates. Furthermore, it has been surprisingly found that the combination of a block copolymer, an epoxy compound comprising at least two epoxy groups, a tackifying resin and a photo-cationic polymerization initiator makes it possible to obtain articles which present a high flexibility.

### Detailed description

The invention will now be described in more detail without limitation in the following description.

### Definitions

By *"photocurable composition"* is meant a composition that is cured when exposed to an energy source such as heat or light.

By *"block copolymer"* is meant a copolymer comprising at least three homopolymeric subunits linked together by covalent bonds.

### Photocurable adhesive composition

In a first aspect, the present invention relates to a photocurable adhesive composition comprising a block copolymer, an epoxy compound comprising at least two epoxy groups, a tackifying resin and a photo-cationic polymerization initiator. It may also comprise other additional components.

### Block copolymers

The photocurable adhesive composition comprises a block copolymer comprising two methacrylate terminal blocks and an acrylate mid-block. In one embodiment, the block copolymer is free of any other moieties or units than the methacrylate terminal blocks-) and the acrylate mid-block and thus corresponds to a block copolymer consisting of two methacrylate terminal blocks and an acrylate mid-block.

The photocurable adhesive composition comprises from 25 to 50 %, preferably from 35 to 45 %, by weight of the block copolymer relative to the total weight of the epoxy compound comprising at least two epoxy groups. For example, the photocurable adhesive composition may comprise from 25 to 30 %, or from 30 to 35 %; or from 35 to 40 %; or from 40 to 45 %; or from 45 to 50 % by weight of the block copolymer relative to the total weight of the epoxy compound comprising at least two epoxy groups.

The photocurable adhesive composition may comprise from 5 to 30 %, preferably from 5 to 20 %, more preferably from 5 to 18 %, by weight of the block copolymer relative to the total weight of the composition. For example, the photocurable adhesive composition may comprise from 5 to 10 %, or from 10 to 15 %, or from 15 to 20 %, or from 20 to 25 %, or from 25 to 30 %, by weight of the block copolymer relative to the total weight of the composition.

The methacrylate blocks may be obtained from methacrylate monomers selected from the group consisting of methyl methacrylate, ethyl methacrylate, methacrylic acid, propyl methacrylate, n-butyl methacrylate, isobutyl methacrylate, pentyl methacrylate, hexyl methacrylate, cyclohexyl methacrylate, isobornyl methacrylate, methoxyethyl methacrylate, 2-aminoethyl methacrylate, PEG methacrylate with polyethylene glycol (PEG) groups having a molar mass in the range of 400 to 10,000 g/mol, and mixtures thereof; preferably from the group consisting of methyl methacrylate, and mixtures thereof; more preferably from methyl methacrylate.

The acrylate block may be obtained from acrylate monomers selected from the group consisting of acrylate, butyl acrylate, 2-ethylhexyl acrylate, and mixtures thereof; preferably from butyl acrylate, 2-ethylhexyl acrylate, and mixtures thereof.

In one embodiment, the block copolymer comprises two poly(methyl methacrylate) terminal blocks and a poly (butyl acrylate) mid-block. In another embodiment, the block copolymer comprises two poly(methyl methacrylate) terminal blocks and a poly(butyl acrylate/2-ethylhexyl acrylate) mid-block.

Suitable block copolymers are commercially available under the tradename Kurarity^{®}, particularly LA and LK series from Kuraray.

The block copolymer may have a glass transition temperature of 0°C or less, and preferably of -30 °C or less. The glass transition temperature is measured by Dynamic mechanical Analysis (DMA) and Dynamic Scanning Calorimetry (DSC).

The block copolymer may have an average molecular weight of 120,000 g/mol or less. The average molecular weight is around 100,000 g/mol.

### Epoxy compounds comprising at least two groups

The photocurable adhesive composition comprises at least one compound comprising at least two epoxy groups. Epoxy groups, also called oxirane groups, are three-membered rings comprising two carbon atoms and one oxygen atom. Upon curing the photocurable adhesive composition, the epoxy compounds will be crosslinked, thereby improving the heat resistance of the cured composition, providing a good wettability of the composition to the different substrates and maintaining a good adhesion to such substrates.

The photocurable adhesive composition may comprise from 30 to 50 %, preferably from 34 to 50 %, by weight of an epoxy compound comprising at least two epoxy groups relative to the total weight of the composition. For example, the photocurable adhesive composition may comprise from 30 to 35 %, or from 35 to 40 %, or from 40 to 45 %, or from 45 to 50 %, by weight of the epoxy compound comprising at least two epoxy groups relative to the total weight of the composition.

The proportions of the compounds present in the photocurable adhesive composition may be defined in relation to the total weight proportion of the epoxy compound comprising at least two epoxy groups i.e. by reference to 100 % of the epoxy compound comprising at least two epoxy groups.

The epoxy compound comprising at least two epoxy groups may be selected from the group consisting in glycidyl ether epoxy resins, glycidyl ester epoxy resins, glycidyl amine epoxy resins, aliphatic epoxy resins and mixtures thereof.

The glycidyl ether epoxy resins may be bisphenol-based resins, novolac-based resins, and mixtures thereof. For example, the bisphenol may be selected from the group consisting of bisphenol A, bisphenol F, bisphenol S, tetra-bromo-bisphenol A, hydrogenated bisphenol A, bisphenol A propylene oxide adducts of bisphenol A, ethylene oxide adducts of bisphenol A, derivatives thereof, and mixtures thereof. The novolac may be selected from the group consisting of phenol novolac, cresol novolac, derivatives thereof, and mixtures thereof. The glycidyl ester epoxy resin may be selected from the group consisting of hexahydrophthalic acid diglycidyl ester, dimer acid diglycidyl ester, and mixtures thereof. The glycidyl amine epoxy resin may be selected from the group of triglycidyl isocyanate diamino-diphenylmethane, tetraglycidyl diamino-diphenylmethane, and mixtures thereof. The aliphatic epoxy resin may be selected from the group consisting of epoxidized polybutadiene, epoxidized soybean oil, alicyclic diepoxy acetal, alicyclic diepoxy adipate, alicyclic diepoxy carboxylate, vinylcyclohexene oxide, and mixtures thereof.

### Oxetane compounds

The photocurable adhesive composition may also comprise, in addition to the epoxy compounds comprising at least two epoxy groups, at least one compound comprising at least two oxetane groups. Oxetane groups are four-membered rings comprising three carbon atoms and one oxygen atom.

The photocurable adhesive composition may comprise from 5 to 20 %, preferably from 8 to 15 %, by weight of the oxetane compound relative to the total weight of the epoxy compound comprising at least two epoxy groups. For example, the photocurable adhesive composition may comprise from 5 to 10 %, or from 10 to 15 %, orfrom 15 to 20 %, by weight of the oxetane compound relative to the total weight of the epoxy compound comprising at least two epoxy groups.

The photocurable adhesive composition may comprise from 3 to 10 %, preferably from 3.5 to 8 %, by weight of the oxetane compound relative to the total weight of the composition. For example, the photocurable adhesive composition may comprise from 3 to 4 %, or from 4 to 5 %, or from 5 to 6 %, or from 6 to 7 %, or from 7 to 8 %, or from 8 to 9 %, or from 9 to 10 %, by weight of the oxetane compound relative to the total weight of the composition.

### Tackifying resin

The photocurable adhesive composition comprises a tackifying resin (tackifier). The purpose of the tackifier resin is to impart adhesion of the photocurable adhesive composition in order to increase the adhesion strength and the compatibility between the different components of the composition.

The photocurable adhesive composition comprises from 10 to 30 %, preferably from 15 to 25 %, by weight of the tackifying resin relative to the total weight of the epoxy compound comprising at least two epoxy groups. For example, the photocurable adhesive composition may comprise from 10 to 15 %, or from 15 to 20 %, or from to 20 to 25 %, or from 25 to 30 %, or from 25 to 30 %, by weight of the tackifying resin relative to the total weight of the epoxy compound comprising at least two epoxy groups.

The photocurable adhesive composition may comprise from 5 to 15 %, preferably from 6 to 10 %, by weight of a tackifying resin relative to the total weight of the composition. For example, the photocurable adhesive composition may comprise from 5 to 6 %, or from 6 to 7 %, or from to 7 to 8 %, or from 8 to 9 %, or from 9 to 10 %, or from 10 to 11 %, or from 11 to 12 %, or from 12 to 13 %, or from 13 to 14 %, or from 14 to 15 %, by weight of the tackifying resin relative to the total weight of the composition.

Suitable tackifying resins are those which are compatible with the polymer components, which extend adhesive properties and which improve specific adhesion. As used herein, the term *"tackifying resin"* include:
- Aliphatic and cycloaliphatic petroleum hydrocarbon resins having Ring and Ball softening points from 95°C to 160°C as determined by ASTM method E28-58T, the latter resins resulting from the polymerization of monomers consisting primarily of aliphatic and/or cycloaliphatic olefins and diolefins; also included are the hydrogenated aliphatic and cycloaliphatic petroleum hydrocarbon resins, examples of such commercially available resins based on a C5 olefin fraction of this type are Piccotac 95 tackifying resin sold by Eastman chemical and Escorez 1310LC sold by ExxonMobil Chemical Company;
- Aromatic petroleum hydrocarbon resins and the hydrogenated derivatives thereof;
- Aliphatic/aromatic petroleum derived hydrocarbon resins and the hydrogenated derivatives thereof;
- Aromatic modified cycloaliphatic resins and the hydrogenated derivatives thereof;
- Polyterpene resins having a softening point from 95°C to 140°C the latter polyterpene resins generally resulting from the polymerization of terpene hydrocarbons, such as the mono-terpenes known as pinene or dipentene, in the presence of Friedel-Crafts catalysts at moderately low temperatures; the hydrogenated polyterpene resins are also included;
- Copolymers and terpolymers of natural terpenes, e.g. styrene/terpene, α-methyl styrene/terpene and vinyl toluene/terpene; Natural and modified rosin such as, for example, gun rosin, wood rosin, tall-oil rosin, distilled rosin, hydrogenated rosin, dimerized rosin and polymerized rosin;
- Glycerol and pentaerythritol esters of natural and modified rosin, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin; and,
- Phenolic-modified terpene resins such as for example, the resin product resulting from the condensation in an acidic medium of a terpene and a phenol;
- Coumarone-indene resins produced by the polymerization of mixtures of indene and coumarone.

Mixtures of two or more of the above described tackifying resins may also be used.

Tackifying resins which are useful for the present invention can include polar tackifying resins. However, the choice of available polar tackifying resins is limited in view of the fact that many of the polar resins appear only partially compatible with polyolefin polymers.

Alternatively, the tackifying resins can be selected from any of the nonpolar types, which are commercially available. One class of preferred resins are aliphatic petroleum hydrocarbon resins, examples of which are based on C5 olefins. Most preferred are nonpolar products which are hydrogenated di-cyclo-pentadiene (DCPD) based or aromatically modified derivatives thereof with softening points above 95°C. Examples of such resins are Escorez 5340, Escorez 5400 and Escorez 5600 sold by ExxonMobil Chemical company, Sukorez SU-120 sold by Kolon and JH6130 sold from Jinhai.

Preferably, the tackifying resin should have a softening point from 80 to 130°C, and more preferably the tackifying resin should be a rosin ester having a softening point from 80 to 130°C.

### Photo-cationic polymerization initiator

The photocurable adhesive composition comprises a photo-cationic polymerization initiator. When irradiated with energy (UV light), it undergoes a fragmentation dissociation reaction, generating one or more molecules of Lewis or Bronsted acid which then catalyze the ring opening and addition of the epoxy compound in order to form a crosslink.

The photocurable adhesive composition comprises from 4 to 15 %, preferably from 6 to 12 %, by weight of the photo-cationic polymerization initiator relative to the total weight of the epoxy compound comprising at least two epoxy groups. For example, the photocurable adhesive composition may comprise from 4 to 6 %, or from 6 to 8 %, or from 8 to 10 %, or from 10 to 12 %, or from 12 to 15 %, by weight of the photo-cationic polymerization initiator relative to the total weight of the epoxy compound comprising at least two epoxy groups.

The photocurable adhesive composition may comprise from 0.1 to 10 %, preferably from 0.5 to 5 %, by weight of the photo-cationic polymerization initiator relative to the total weight of the composition. For example, the photocurable adhesive composition may comprise from 0.1 to 1 %, or from 1 to 2 %, or from 2 to 3 %, or from 3 to 4 %, or from 4 to 5 %, or from 5 to 6 %, or from 6 to 7 %, or from 7 to 8 %, or from 8 to 9 %, or from 9 to 10 %, by weight of the photo-cationic polymerization initiator relative to the total weight of the composition.

The photo-cationic polymerization initiator comprises a cation and a counter-anion.

Suitable cations can be organic onium cations, for example those described in US 4250311, US 3708296, US 4069055, US 4216288, US 5084586, US 5124417, US 5554664, which are incorporated herein by reference. The cations may be selected from aliphatic or aromatic Group IVA-VIIA (CAS version) centered onium salts; preferably from I-, S-, P-, Se- N-and C-centered onium salts (such as salts selected from sulfoxonium, iodonium, sulfonium, selenonium, pyridinium, carbonium and phosphonium salts); more preferably from I- and S-centered onium salts (such as salts selected from sulfoxonium, diaryliodonium, triarylsulfonium, diarylalkylsulfonium, dialkylarylsulfonium, and trialkylsulfonium. By "aryl" and "alkyl" is meant an unsubstituted or substituted aromatic or aliphatic moiety, respectively, having up to four independently selected substituents. The substituents on the aryl or alkyl moieties will preferably have less than 30 carbon atoms and up to 10 heteroatoms selected from N, S, non-peroxidic O, P, As, Si, Sn. B, Ge, Te, Se. Examples include hydrocarbyl groups such as methyl, ethyl, butyl, dodecyl, tetracosanyl, benzyl, allyl, benzylidene, ethenyl and ethynyl; hydrocarbyloxy groups such as methoxy, butoxy and phenoxy; hydrocarbylmercapto groups such as methylmercapto and phenyimercapto; hydrocarbyloxycarbonyl groups such as methoxycarbonyl and phenoxycarbonyl; hydrocarbylcarbonyl groups such as formyl, acetyl and benzoyl; hydrocarbylcarbonyloxy groups such as acetoxy and cyclohexanecarbonyloxy; hydrocarbylcarbonamido groups such as acetamido and benzamido; azo; boryl; halo groups such as chloro, bromo, iodo and fluoro; hydroxy; oxo; diphenylarsino; diphenylstilbino; trimethylgermano; trimethylsiloxy; and aromatic groups such as cyclopentadienyl, phenyl, tolyl, naphthyl, and indenyl. With the sulfonium salts, it is possible for the substituent to be further substituted with a dialkyl- or diarylsulfonium cation; an example of this would be 1,4-phenyiene bis(diphenylsufonium).

The nature of the counter-anion in the photo-cationic polymerization initiator can influence the rate and extent of cationic addition polymerization of the epoxy groups. For example, J.V. Crivello, and R. Narayan, Chem. Mater., 4, 692, (1992), report that the order of reactivity among commonly used nonnucleophilic anions is SbF₆⁻ > AsF6⁻ > PF₆⁻ > BF₄⁻. The influence of the anion on reactivity has been ascribed to three principle factors: (1) the acidity of the protonic or Lewis acid generated, (2) the degree of ion-pair separation in the propagating cationic chain and (3) the susceptibility of the anions to fluoride abstraction and consequent chain termination.

Suitable onium salts may be selected from diazonium salts (such as aryl diazonium salts); halonium salts (such as diarlyiodonium salts); sulfonium salts (such as triarylsulfonium salts); selenonium salts (such as triarylselenonium salts); sulfoxonium salts (such as triarylsulfoxonium salts); and other miscellaneous classes of onium salts (such as triaryl phosphonium and arsonium salts), pyrylium salts, thiopyrylium salts, and mixtures thereof.

Suitable photo-cationic polymerization initiators may be selected from the group consisting of bis(4-t-butylphenyl) iodonium hexafluoroantimonate, a mixture of triarylsulfonium salts (diphenyl(4-phenyllthio) phenylsufonium hexafluoroantimonate, bis(4-(diphenylsulfonio)phenyl)sulfide hexafluoroantimonate), (4-methoxyphenyl)phenyl iodonium triflate, bis(4-tert-butylphenyl) iodonium camphorsulfonate, bis(4-tert-butylphenyl) iodonium hexafluoroantimonate, bis(4-tert- butylphenyl) iodonium hexafluorophosphate, bis(4-tert-butylphenyl) iodonium tetraphenylborate, bis(4-tert-butylphenyl) iodonium tosylate, bis(4-tert-butylphenyl) iodonium triflate, ([4-(octyloxy)phenyl]phenyliodonium hexafluorophosphate), ([4-(octyloxy)phenyl]phenyliodonium hexafluoroantimonate, (4-isopropylphenyl)(4-methylphenyl)iodonium tetrakis(pentafluorophenyl) borate, bis(4-methylphenyl) iodonium hexafluorophosphate , 4-(2-hydroxy-1-tetradecycloxy)phenyl]phenyl iodonium hexafluoroantimonate, triphenyl sulfonium hexafluoroantimonate, diphenyl(4-phenylthio)phenylsulfonium hexafluorophosphate, bis(4-(diphenylsulfonio)phenyl)sulfide bis(hexafluorophophate, diphenyl(4-phenythio)phenylsulfonium hexafluoroantimonate, bis(4-(diphenylsulfonio)phenyl)sulfide hexafluoroantimonate, and blends of these triarylsulfonium salts .

### Epoxy compounds comprising one epoxy group

The photocurable adhesive composition may also comprise at least one epoxy compound comprising one epoxy group only.

The photocurable adhesive composition may comprise from 30 to 80 %, preferably from 45 to 55 %, by weight of the epoxy compound comprising one epoxy group relative to the total weight of the epoxy compound comprising at least two epoxy groups. For example, the photocurable adhesive composition may comprise from 30 to 35 %, or from 35 to 40 %, or from 40 to 45 %, or from 45 to 50 %, or from 50 to 55 %, or from 55 to 60 %, or from 60 to 65 %, or from 65 to 70 %, or from 70 to 75 %, or from 75 to 80 %, by weight of the epoxy compound comprising one epoxy group relative to the total weight of the epoxy compound comprising at least two epoxy groups.

The photocurable adhesive composition may comprise from 10 to 30 %, preferably from 15 to 25 %, by weight of an epoxy compound comprising one epoxy group relative to the total weight of the composition. For example, the photocurable adhesive composition may comprise from 10 to 15 %, or from 15 to 20 %, or from 20 to 25 %, or from 25 to 30 %, by weight of the epoxy compound comprising one epoxy group relative to the total weight of the composition.

The epoxy compound comprising one epoxy group may be selected from the group consisting in glycidyl ether epoxy resins, glycidyl ester epoxy resins, glycidyl amine epoxy resins, aliphatic epoxy resins and mixtures thereof; preferably the epoxy compound comprising one epoxy group is a glycidyl ether epoxy resin.

### Polyols

The photocurable adhesive composition may also comprise at least one polyol.

The photocurable adhesive composition may comprise from 5 to 50 %, preferably from 20 to 30 %, by weight of the polyol relative to the total weight of the epoxy compound comprising at least two epoxy groups. For example, the photocurable adhesive composition may comprise from 5 to 10 %, or from 10 to 15%, or from 15 to 20 %, or from 20 to 25%, or from 25 to 30 %, or from 30 to 35%, or from 35 to 40 %, or from 40 to 45%, or from 45 to 50 %, by weight of the polyol relative to the total weight of the epoxy compound comprising at least two epoxy groups.

The photocurable adhesive composition may comprise from 10 to 30 %, preferably from 15 to 20 %, by weight of the polyol relative to the total weight of the composition. For example, the photocurable adhesive composition may comprise from 10 to 15 %, or from 15 to 20 %, or from 20 to 25 %, or from 25 to 30 %, by weight of the polyol relative to the total weight of the composition.

The polyol may be selected from the group consisting of polyester polyols, polycarbonate polyols, polyolefin polyols, polyether polyols, and mixtures thereof.

A polyester polyol is the condensation product of a polyhydric alcohol and a polybasic carboxylic acid. The polyhydric alcohols may be selected from the group consisting of ethylene glycol, propylene glycol, butanediol, diethylene glycol, glycerin, hexanetriol, hexane glycol, and trimethylolpropane. The polybasic carboxylic acids may be selected from the group consisting of adipic acid, glutaric acid, sebacic acid, azelaic acid, fumaric acid, maleic acid, phthalic acid, terephthalic acid, dimers of these acids (dimer acid), and pyromellitic acid.

A polyether polyol is a product obtained by addition/polymerization of one or more than one type of alkylene oxide to a compound having two or more active hydrogens. The alkylene oxides may be selected from the group consisting of ethylene oxide, propylene oxide, butylene oxide, and tetrahydrofuran. The compounds having two or more active hydrogens may be selected from the group consisting of polyhydric alcohols and polybasic carboxylic acids mentioned above, amines such as ethylenediamine and hexamethylenediamine, and alkanols such as ethanolamine and propanolamine.

A polycarbonate polyol is a product obtained by a transesterification reaction of an organic carbonate and one or more types of diols such as aliphatic diols for example. The aliphatic diols may be selected from the group consisting of ethylene glycol, propylene glycol, butanediol, and 1,6-hexanediol.

A polyolefin polyol is a polyol having a polyolefin saturated hydrocarbon skeleton and a reactive primary hydroxyl group at both end chains.

### Sensitizer

The photocurable adhesive composition may also comprise at least one sensitizer.

The photocurable adhesive composition may comprise from 4 to 15 %, preferably from 6 to 12 %, by weight of the sensitizer relative to the total weight of the epoxy compound comprising at least two epoxy groups. For example, the photocurable adhesive composition may comprise from 4 to 6 %, or from 6 to 8 %, or from 8 to 10 %, or from 10 to 12 %, or from 12 to 15 %, by weight of the sensitizer relative to the total weight of the epoxy compound comprising at least two epoxy groups.

The photocurable adhesive composition may comprise from 0.1 to 10 %, preferably from 0.5 to 5 %, by weight of the sensitizer relative to the total weight of the composition. For example, the photocurable adhesive composition may comprise from 0.1 to 1 %, or from 1 to 2 %, or from 2 to 3 %, or from 3 to 4 %, or from 4 to 5 %, or from 5 to 6 %, or from 6 to 7 %, or from 7 to 8 %, or from 8 to 9 %, or from 9 to 10 %, by weight of the sensitizer relative to the total weight of the composition.

The sensitizers may be selected from the group consisting of chalcone derivatives, unsaturated ketones represented by dibenzalacetone, 1,2-diketone derivatives represented by benzylcamphorquinone, benzoin derivatives, fluorene derivatives, naphthoquinone derivatives, anthraquinone derivatives, xanthene derivatives, thioxanthene derivatives, xanthone derivatives, thioxanthone derivatives, coumarin derivatives, keticcoumarin derivatives, cyanine derivatives, merocyanine derivatives, oxonol derivatives, and other polymethine dyes, acridine derivatives, azine derivatives, thiazine derivatives, oxazine derivatives, indoline derivatives, azulene derivatives, azurenium derivatives, squarylium derivatives, porphyrin derivatives, tetraphenylporphyrin derivatives, triarylmethane derivatives, tetrabenzoporphyrin derivatives, tetrapyrazinopolyphyrazine derivatives, phthalocyanine derivatives, tetraazaporphyrazine derivatives, tetraquinosalyloporphyrazine derivatives, naphthalocyanine derivatives, subphthalocyanine derivatives, pyrylium derivatives, thiopyrylium derivatives, tetraphyrin derivatives, anulene derivatives, spiropyran derivatives, spirooxazine derivatives, thiospiropyran derivatives, metal arene complexes, organic ruthenium complexes, and mixtures thereof.

### Viscosity modifier

The photocurable adhesive composition may also comprise at least one viscosity modifier.

The photocurable adhesive composition may comprise from 5 to 30 %, preferably from 15 to 30 %, by weight of the viscosity modifier relative to the total weight of the epoxy compound comprising at least two epoxy groups. The photocurable adhesive composition may thus comprise from 5 to 10 %, or from 10 to 15 %, or from 15 to 20 %, or from 20 to 25 %, or from 25 to 30 %, by weight of the viscosity modifier relative to the total weight of the epoxy compound comprising at least two epoxy groups.

The photocurable adhesive composition may comprise from 0.1 to 20 %, preferably from 5 to 10 %, by weight of the viscosity modifier relative to the total weight of the composition. For example, the photocurable adhesive composition may comprise from 0.1 to 2 %, or from 2 to 4 %, or from 4 to 6 %, or from 6 to 8 %, or from 8 to 10 %, or from 10 to 12 %, or from 12 to 14 %, or from 14 to 16 %, or from 16 to 18 %, or from 18 to 20 %, by weight of the viscosity modifier relative to the total weight of the composition.

The viscosity modifier may be selected from the group consisting of white carbon, colloidal silica, silica sand (silica stone powder), hydrophilic fumed silica (such as Aerosil^{®} RY-200), diatomaceous earth, hydrophobic calcium carbonate, glass balloons, glass beads, polyvinylpyrrolidone, hyperbranched polyesters, amide wax, and mixtures thereof; preferably the viscosity modifier is hydrophilic fumed silica. These viscosity adjusting agents may be used alone or in combination of two or more kinds. Preferred viscosity modifiers include inorganic viscosity modifiers such as hydrophilic fumed silica.

### Auxiliary additives

The photocurable adhesive composition may also comprise at least one auxiliary additive.

The photocurable adhesive composition may comprise from 0.01 to 5 %, preferably from 0.1 to 3 %, by weight of the auxiliary additive relative to the total weight of the epoxy compound comprising at least two epoxy groups.

The photocurable adhesive composition may comprise from 0.01 to 5 %, preferably from 0.1 to 3 %, by weight of the auxiliary additive relative to the total weight of the composition.

The auxiliary additives may be selected from the group consisting of polymerization inhibitors, pigments, adhesion promoters, antioxidants, curing accelerators, fillers, plasticizers, surfactants, lubricants, antistatic agents, flame retardants and mixtures thereof.

### Article

In a second aspect, the invention relates to an article comprising at least one interior or exterior surface coated with the photocurable adhesive composition as described above. In some embodiments, the present invention relates to an assembly product comprising at least two substrates bonded by at least one photocurable adhesive composition according to the invention.

The substrate for applying the photocurable composition of the present invention may be chosen from quartz, glass, optical film, ceramic material, vapor deposition film, magnetic film, reflection film, metal substrate such as Ni, Cu, Cr, Fe, polymer substrate such as paper, SOG, polyester film, polycarbonate film, polyimide film, TFT array substrate, PDP electrode plate, glass or transparent plastic substrate, conductive substrate such as ITO or metal, insulating substrate, silicone, nitriding. In a preferred embodiment, the substrate is opaque. By "opaque" is meant a substrate through which electromagnetic waves in the range of 0.1 to 10⁶ nm such as gamma rays, X-rays, ultraviolet rays, visible rays, infrared rays, and radio waves cannot pass.

The substrates may be different or of the same nature, with various forms (layer or film, strands, fluff).

The photocurable adhesive composition of this invention can be applied to the fields of electric and electronics, automobiles, construction, home appliances, medical care, and textiles. For example, the photocurable adhesive composition can be applied to smartphones, wearable devices, digital cameras, connectors, automobile instrument panels, ECUs, back monitor cameras, refrigerators, washing machines, parts such as air conditioners, electronic boards, heart rate monitors, blood pressure monitors and other medical equipment, textile processing.

### Use

In a third aspect, the present invention relates to the use of the photocurable adhesive composition as described above, for coating a substrate or for bonding two substrates together.

The energy source for curing the photocurable composition of the present invention is not particularly limited. Such source may include high energy ionizing radiation, light having a wavelength in the region of near ultraviolet, far ultraviolet, visible, infrared, or radiation. As a high-energy mention can be made of a ionizing radiation source, an electron beam accelerated by an accelerator such as a cockcroft accelerator, a handagraaf accelerator, a linear accelerator, a betatron, or a cyclotron is industrially most conveniently and economically used. However, radiation such as y rays, X rays, α rays, neutron rays, proton rays emitted from radioisotopes or nuclear reactors can also be used. Examples of an ultraviolet ray source may include an ultraviolet fluorescent lamp, a low-pressure mercury lamp, a high-pressure mercury lamp, an ultrahigh-pressure mercury lamp, a xenon lamp, a carbon arc lamp, and a solar lamp. Radiation may include, for example, microwaves and extreme ultraviolet radiation (EUV). Also, laser light used in semiconductor microfabrication such as LED, semiconductor laser light, or 248 nm KrF excimer laser light or 193 nm ArF excimer laser can be suitably used in the present invention. These lights may be monochromatic light, or may be a plurality of lights having different wavelengths (mixed light).

Preferably, the energy source used in the present invention is UV light having a wavelength from 200 to 500 nm. The process of manufacturing an assembly product (or laminate) may comprise:
- a step (i) of coating said composition on a first substrate;
- a step (ii) of exposing the substrate coated with the composition to an energy source, and
- optionally a step (iii) of putting into contact the coated surface of the first substrate with the surface of a second substrate, so as to form an adhesive joint bonding the two substrates.

### Examples

The following examples illustrate the invention without limiting it.

### Materials

Epoxy resin A: Epikote^{®} 828 from Mitsubishi Cheminal
Epoxy resin B: Epikote^{®} 834 from Mitsubishi Cheminal
Epoxy resin C: 400P^{®} from Kyoeisha Kagaku
Oxetane resin: Aron oxetane OXT-221^{®} from Toa Gossei
Reactive diluent: SY-OCG^{®} from Sakamoto Yakukin
Block copolymer: Kurarity^{®} LA-3320 from Kuraray
Viscosity modifier: Aerosil^{®} RY-200^{®} from Nippon Aerosil
Photoinitiator: AT6992^{®} from Aceto
Tackifying resin A: KE-100^{®} from Arakawa Kagaku
Tackifying resin B: YS polystar G125^{®} from Yasuhara Chemical

### Preparation of the compositions

The photocurable adhesive compositions of this invention can be prepared in a planetary mixer.

Composition 1 (C1) was prepared by charging the epoxy resin A, the tackifier resin A, and the block copolymer into the planetary mixer. After stirring the mixture at a temperature between 160 and 170°C for 1 hour, and after the dissolution of the block copolymer, the temperature was lowered to about 120°C and the reactive diluent and the oxetane resin were added to the mixture. The mixture was then stirred at a temperature between 100 and 120°C for 1 hour. Then, the temperature was gradually reduced, the viscosity modifier was added at around 50 to 60°C, and the mixture was stirred for about 1 hour. Finally, the photoinitiator was added, and the mixture was stirred at around 25 to 40°C for 30 minutes. Then, it was taken out and passed 2 times with 3 rolls mil to obtain a composition 1 (C1).

Compositions C2-C4 (according to the invention) and compositions C5 to C8 (comparative compositions) were also prepared by the same preparation method.

The proportions of the compounds present in the photocurable adhesive compositions are defined in relation to the total weight proportion of the epoxy compound comprising at least two epoxy groups i.e. by reference to 100 % of the epoxy compound comprising at least two epoxy groups.

### Methodology

The viscosity (Pa.s, 25°C) is assessed according to the following method: A defoamed UV resin sample (12 g) is obtained and set in a Brookfield HB type rotational viscometer. The viscosity is measured using a No. 27 rotor while the liquid temperature is kept at 25°C. The UV resin is allowed to stand at 25°C for 10 minutes and then rotated at 0.5 rpm. After the viscosity display shows a peak, a first measurement is performed after 2 minutes. The rotation speed is increased from 0.5 rpm to 5.0 rpm (high-speed like), and a second measurement is performed after 1 minute of rotation.

The open time (min) is assessed according to following method: An UV resin is applied on an aluminium substrate (A6061P) to an area of 6.25 cm² with a coating amount of 200 µm. The applied resin is then irradiated with UV-A (wavelengths of 1,500-2,000 mJ/cm²). After irradiation, the time needed (open time) for obtaining a coated surface, which is not sticky anymore and which cannot be attached to the counter substrate, is measured.

The Shore A hardness is assessed according to following method: The resin is cured using UV irradiation (UV-A wavelengths of 1,500-2,000 mJ/cm²). Cured sheets are overlaid on top of each other in order to prepare a test piece having a thickness of about 10 mm. The hardness (Type A) of the test piece is measured at a relative humidity of 50±5% and at a temperature of 23±3°C, using an Asker hardness tester supplied by Kobunshi Keiki Co.; Ltd.

The tensile strength (MPa) and the elongation (%) are assessed according to following method: The resin is cured using UV irradiation (UV-A wavelengths of 1,500-2,000 mJ/cm²). The cured sheet is punched out into a dumbbell No. 3 mold in order to prepare a test piece. The film properties of the test piece are measured at a relative humidity of 50±5% and at a temperature of 23±3°C using the apparatus Tensilon RTC-1310 supplied by Orientec Co., Ltd. with a tensile speed of 100mm/min. The tensile strength (MPa) is calculated as follows: breaking strength/ sectional area. The elongation (%) is calculated as follows: (breaking elongation / reference length [20mm]) x 100.

The lap shear strengths (MPa) are assessed according to following method: The cured resin is applied onto a designated substrate (100 mm × 25 mm × 1 mm) using a doctor blade in order to obtain a thickness of 200 µm and an area of 6.25 cm². The Light Hammer6 (electrodeless metal halide lamp) UV irradiator supplied by Heraeus Co., Ltd. is used with a predetermined integrated light amount (1,500 to 2,000 mJ/cm²). Within 30 seconds after UV irradiation, the base materials are bonded together to form a test piece. After leaving it at a relative humidity of 50-65% and at a temperature of 23°C for 2 days or more, the tensile shear strength is measured using Tensilon RTC-1310 supplied by Orientec Co., Ltd. at a relative humidity of 50-65% and at a temperature of 23°C using Tensilon RTC-1310 supplied by Orientec Co., Ltd. with a tensile speed of 20 mm/min.

The storage stability is assessed according to following method: 200g of UV resin is placed into a PP cup, before being closed with a lid and left in a resting environment at a relative humidity of 50±5% and at a temperature of 23±3°C. The viscosity is measured at regular intervals (months) till the viscosity measured exceeds more than twice the initial viscosity (shelf-life).

### Compositions

**Table 1**

| Materials | C1 | C2 | C3 | C4 | C5 | C6 | C7 | C8 |
|---|---|---|---|---|---|---|---|---|
| Epoxy resin A | 100 | - | - | 100 | 100 | 100 | 100 | 100 |
| Epoxy resin B | - | 100 | - | - | - | - | - | - |
| Epoxy resin C | - | - | 100 | | - | - | - | - |
| Oxetane resin | 10 | 10 | 10 | 10 | 10 | 10 | 10 | 10 |
| Reactive diluent | 50 | 50 | 50 | 50 | 50 | 50 | 50 | 50 |
| Block copolymer | 40 | 40 | 40 | 40 | 40 | 100 | 40 | 40 |
| Viscosity modifier | 25 | 25 | 25 | 25 | 25 | 25 | 25 | 25 |
| Photoinitiator | 8 | 8 | 8 | 8 | 8 | 8 | 1 | 20 |
| Tackifying resin A | 20 | 20 | 20 | - | - | - | - | - |
| Tackifying resin B | - | - | - | 20 | - | 20 | 20 | 20 |

**Table 2**

| Parameters | C1 | C2 | C3 | C4 | C5 | C6 | C7 | C8 |
|---|---|---|---|---|---|---|---|---|
| Viscosity (Pa.s, 25°C/0.5 rpm) | 1000 | 1500 | 750 | 1000 | 1000 | 2000 | 1000 | 900 |
| Viscosity (Pa.s, 25°C/5.0 rpm) | 200 | 220 | 136 | 200 | 220 | 400 | 200 | 250 |
| Open time (min) | 3 | 3 | 3 | 1 | 1 | 1 | 2 | 2 |
| Shore A hardness | 70 | 65 | 70 | 70 | 70 | 50 | 70 | 65 |
| Tensile strength (MPa) | 5 | 6 | 4 | 6 | 5 | 5 | 5 | 4 |
| Elongation (%) | 150 | 200 | 180 | 200 | 170 | 250 | 150 | 150 |
| Lap shear strength (MPa) Completed cure | 10 | 10 | 7 | 11 | 8 | 7 | 9 | 9 |
| Lap shear strength (MPa) After 120 min | 6.5 | 7.5 | 6 | 6 | 4.5 | 5 | 2 | 3.5 |
| Storage stability (months) | 4 | 4 | 4 | 3 | 4 | 2 | 4 | 2 |

Compositions C1 to C4 (according to the invention) show good adhesive and curing properties. Based on the above table, it is shown that these compositions present good physical properties, high adhesive strength after two hours, and high storage stability.

On the other hand, C5 (comparative composition) which is devoid of tackifier resin, presents a sufficient storage stability but a low adhesive strength after two hours.

C6 (comparative composition) which comprises 100 % by weight of block copolymer relative to the weight of the epoxy compound comprising at least two epoxy groups, presents not only a low adhesive strength after two hours but also a low storage stability.

C7 and C8 (comparative compositions) comprise an amount of photoinitiator of 1 and 20 % by weight respectively relative to the weight of the epoxy compound comprising at least two epoxy groups. On the one hand C7 presents a sufficient storage stability but a low adhesive strength after two hours, and on the other hand C8 presents not only a low adhesive strength after two hours but also a low storage stability. Thus, the composition according to the present invention makes it possible to achieve at the same time good adhesion properties and a good storage stability.

## Claims

1. A photocurable adhesive composition comprising, by total weight of the epoxy compound comprising at least two epoxy groups:
- an epoxy compound comprising at least two epoxy groups;
- from 25 to 50 %, preferably from 35 to 45 %, by weight of a block copolymer comprising at least two methacrylate terminal blocks and an acrylate mid-block;
- from 10 to 30 %, preferably from 10 to 30 %, by weight of a tackifying resin; and
- from 4 to 15 %, preferably from 6 to 12 %, by weight of a photo-cationic polymerization initiator.

2. The composition according to any preceding claims, wherein the methacrylate terminal blocks are obtained from methacrylate monomers selected from the group consisting of methyl methacrylate, ethyl methacrylate, methacrylic acid, propyl methacrylate, n-butyl methacrylate, isobutyl methacrylate, pentyl methacrylate, hexyl methacrylate, cyclohexyl methacrylate, isobornyl methacrylate, methoxyethyl methacrylates, 2-aminoethyl methacrylates, PEG methacrylates with polyethylene glycol (PEG) groups having a molar mass in the range of 400 to 10,000 g/mol, and mixtures thereof; preferably wherein the methacrylate blocks are obtained from methyl methacrylate.

3. The composition according to any preceding claims, wherein the acrylate mid-block is obtained from acrylate monomers selected from the group consisting of acrylate, butyl acrylate, 2-ethylhexyl acrylate, and mixtures thereof; preferably from butyl acrylate, 2-ethylhexyl acrylate, and mixtures thereof.

4. The composition according to any preceding claims, wherein the block copolymer has a glass transition temperature of 0°C or less; preferably of -30 °C or less.

5. The composition according to any preceding claims, wherein it comprises from 30 to 50 %, by weight of the epoxy compound comprising at least two epoxy groups relative to the total weight of the composition.

6. The composition according to any preceding claims, wherein the epoxy compound comprises at least two epoxy groups is selected from the group consisting of glycidyl ether epoxy resins, glycidyl ester epoxy resins, glycidyl amine epoxy resins, aliphatic epoxy resins and mixtures thereof.

7. The composition according to any preceding claims, further comprising at least one oxetane compound, preferably from 5 to 20 %, more preferably from 8 to 15 %, by weight of at least one oxetane compound relative to the total weight of the epoxy compound comprising at least two epoxy groups.

8. The composition according to any preceding claims, wherein the photo-cationic polymerization initiator is an onium salt comprising an onium cation and an hexafluorophosphate anion.

9. The composition according to any preceding claims, further comprising at least one epoxy compound comprising one epoxy group, preferably from 30 to 80 %, more preferably from 45 to 55 %, by weight of at least one epoxy compound comprising one epoxy group relative to the total weight of the epoxy compound comprising at least two epoxy groups.

10. The composition according to any preceding claims, further comprising at least one polyol, preferably from 5 to 50 %, more preferably from 20 to 30 %, by weight of at least one polyol relative to the total weight of the epoxy compound comprising at least two epoxy groups.

11. The composition according to any preceding claims, wherein it comprises at least one sensitizer, preferably from 4 to 15 %, more preferably from 6 to 12 %, by weight of at least one sensitizer relative to the total weight of the epoxy compound comprising at least two epoxy groups.

12. The composition according to any preceding claims, wherein it comprises at least one viscosity modifier, preferably from 5 to 30 %, more preferably from 15 to 30 %, by weight of at least viscosity modifier relative to the total weight of the epoxy compound comprising at least two epoxy groups.

13. The composition according to any preceding claims, wherein it comprises at least one auxiliary additive selected from the group consisting of polymerization inhibitors, pigments, adhesion promoters, antioxidants, curing accelerators, fillers, plasticizers, surfactants, lubricants, antistatic agents, flame retardants and mixtures thereof.

14. An article comprising at least one interior or exterior surface coated with the adhesive composition according to any claims 1 to 13.

15. The use of the composition according to any claims 1 to 13, as an adhesive for bonding two substrates together, or as a coating on the surface of a substrate.
